# EUROPEAN PATENT APPLICATION

(11) **EP 4 706 819 A1**
(43) Date of publication of application: **11.03.2026**
(21) Application number: 23939348.1
(22) Date of filing: 11.12.2023
(51) Int. Cl.: B01J 23/83, B01J 37/10, B01J 37/03, C01B 3/40

(54) **CATALYST AND PREPARATION METHOD THEREFOR AND USE THEREOF, AND METHOD FOR REFORMING REACTION OF METHANE AND CARBON DIOXIDE**

(30) Priority: 31.05.2023 CN 202310636802
(71) Applicant: China Petroleum & Chemical Corporation, Beijing 100728 (CN); SINOPEC QILU BRANCH COMPANY, Shandong 255400 (CN)
(72) Inventor: WANG, Min, Zibo, Shandong 255400 (CN); BAI, Zhimin, Zibo, Shandong 255400 (CN); YU, Hantao, Zibo, Shandong 255400 (CN); WANG, Hao, Zibo, Shandong 255400 (CN); WANG, Xiaofan, Zibo, Shandong 255400 (CN); ZHU, Wenxiang, Zibo, Shandong 255400 (CN); LIANG, Ke, Zibo, Shandong 255400 (CN)
(74) Representative: Hoffmann Eitle
(86) International application number: PCT/CN2023/137920
(87) International publication number: WO 2024/244379

(57) **Abstract**

A catalyst and a preparation method therefor and a use thereof, and a method for reforming reaction of methane and carbon dioxide. The catalyst comprises an active matrix and CeO₂, wherein the active matrix comprises La-Ni-based oxide having a perovskite structure; upon X-ray diffraction measurement, the catalyst has diffraction peaks at 2θ of 32.7±0.3°, 31.3±0.3°, and 28.0±0.3°; and upon H₂-TPR measurement, the catalyst has at least one reduction peak at 400°C or below, and based on the total amount of the catalyst, the content of CeO₂ is 1-20 wt%. The catalyst has relatively high activity and stability, can effectively enhance the adsorption of CO₂ and reduce the adsorption and cracking of CH₄ in the reaction process, and has good carbon deposition resistance.

## Description

### CROSS-REFERENCE TO RELATED APPLICATIONS

The application claims the benefit of the China patent application No. "202310636802.0", filed on May 31, 2023, the content of which is specifically and entirely incorporated herein by reference.

### TECHNICAL FIELD

The present invention relates to the technical field of catalysts, in particular to a catalyst and a preparation method therefor and a use thereof, and a method for reforming reaction of methane and carbon dioxide.

### BACKGROUND ART

Both methane and carbon dioxide are greenhouse gases. The reforming of methane and carbon dioxide into syngas is an efficient path for large-scale utilization of CO₂, the relatively inexpensive natural gas is also used for producing syngas (CO+H₂), the syngas can be further converted into downstream hydrocarbons and other high value-added products. However, the biggest problem during the reaction process may be that the catalyst used in the reforming of methane and carbon dioxide into syngas is primarily a nickel-based catalyst, the catalyst is prone to form the carbon deposition. If the carbon deposition problem cannot be effectively solved, the stability and industrial process of the catalyst will be severely restrained.

Perovskite has emerged as the focus of attention in various fields due to its properties such as excellent conductivity, magnetism, thermoelectricity, piezoelectricity, and low fabrication costs, as well as thermodynamic and mechanical stability at high temperature. Perovskite composite oxide material is an excellent oxygen ion and electron conductor under the high temperature conditions, and can release oxygen gas under the inert conditions, and can replenish oxygen through the reduction-oxidation (Redox) process. Therefore, the use of a perovskite oxide as the catalyst for reforming reaction of methane and carbon dioxide can desirably eliminate the carbon deposition on the catalyst surface, and improve the carbon deposition resistance of the catalyst, but the activity and carbon deposition resistance of that catalyst are still not satisfactory.

CN113600200A discloses a preparation method of an anti-carbon deposition methane dry gas reforming Ni-based alkaline earth metal modified catalyst, the preparation method comprises: initially obtaining an alkaline earth metal-doped LaAl perovskite carrier, and then loading Ni on the carrier by an impregnation method, but the stability of said catalyst is still not ideal. CN114588912A discloses a preparation method of an perovskite type catalyst suitable for methane dry reforming, the preparation method comprises: doping an alkali metal K ion at the site-A of LaNiO₃ perovskite to form LaₓK₁₋ₓNiO₃, on this basis, adding a solid powder of CeO₂ with a stable structure and large oxygen capacity. CN114471581A discloses an anti-carbon-deposition methane and carbon dioxide reforming catalyst and a preparation method thereof, the preparation method comprises: loading Ce on a perovskite oxide surface to obtain Ce-loaded ABO₃ type perovskite oxide catalyst. Each of the above schemes takes advantage of the oxygen storage property of CeO₂ to rapidly eliminate the carbon deposition on the catalyst surface during the reforming reaction process of methane and carbon dioxide, but the loading amount of CeO₂ is high, which is disadvantageous for enhancement of the catalyst activity.

### SUMMARY OF THE INVENTION

The present invention aims to overcome the defects in the prior art with respect to the insufficient activity, poor stability, and poor carbon deposition resistance of the methane and carbon dioxide reforming catalyst, and provides a catalyst and a preparation method therefor and a use thereof, and a method for reforming reaction of methane and carbon dioxide, catalyst has desirable carbon deposition resistance, and high activity and stability.

In order to achieve the above objects, the first aspect of the present invention provides a catalyst comprising an active matrix and CeO₂, wherein the active matrix comprises La-Ni-based oxide having a perovskite structure; upon X-ray diffraction measurement, the catalyst has diffraction peaks at 2θ of 32.7±0.3°, 31.3±0.3°, and 28.0±0.3°;
Upon H₂-TPR measurement, the catalyst has at least one reduction peak at 400°C or below;
Based on the total amount of the catalyst, the content of CeO₂ is 1-20 wt%.

Preferably, the content of CeO₂ is 1-6 wt%, more preferably 2-4 wt%, based on the total amount of the catalyst.

The second aspect of the present invention provides a preparation method for the catalyst, the preparation method comprises the following steps:
(1) Mixing a La source and a Ni source in the presence of a complexing agent to obtain a mixture;
(2) Reacting the mixture to form a gel, then subjecting the gel to a first roasting to obtain a semi-finished catalyst;
(3) Contacting a solution containing soluble compounds of Ce with the semi-finished catalyst in the presence of a surfactant, and then carrying out a second roasting;
Wherein the surfactant comprises a polyoxyethylene-based nonionic surfactant and a polyalcohol-based nonionic surfactant.

The third aspect of the present invention provides a use of the catalyst according to the first aspect or the catalyst produced with the preparation method according to the second aspect in the reforming reaction of methane and carbon dioxide.

The fourth aspect of the present invention provides a method for reforming reaction of methane and carbon dioxide, the method comprises: contacting methane and carbon dioxide with the catalyst under the reforming reaction conditions, wherein said catalyst is the catalyst according to the first aspect or the catalyst produced with the preparation method according to the second aspect.

The catalyst provided by the present invention has relatively high activity and stability, can effectively enhance the adsorption of CO₂ and reduce the adsorption and cracking of CH₄ in the reaction process, and has good carbon deposition resistance.

### BRIEF DESCRIPTION OF THE DRAWINGS

FIG. 1 illustrates an XRD spectrogram of the catalysts prepared in Examples 1, 2, 3, 4 and Comparative Examples 6 and 7 of the invention;
FIG. 2 illustrates a sample crystalline phase analysis spectrogram of the catalysts prepared in Example 1 and Comparative Example 2 of the invention;
FIG. 3 shows a H₂-TPR curve of catalysts prepared in Examples 1, 2, 3, 4, 6 and Comparative Example 6 of the invention;
FIG. 4 shows a H₂-TPR curve of catalysts prepared in Example 1 and Comparative Example 8 of the invention;
FIG. 5 illustrates the stability evaluation results of the catalysts prepared in Examples 1, 6 and Comparative Example 1 of the invention;
FIG. 6 is a diagram showing the weight loss of the catalysts prepared in Examples 1, 6 and Comparative Example 6 of the invention after 100 hours of reaction.

### DESCRIPTION OF THE PREFERRED EMBODIMENT

The terminals and any value of the ranges disclosed herein are not limited to the precise ranges or values, such ranges or values shall be comprehended as comprising the values adjacent to the ranges or values. As for numerical ranges, the endpoint values of the various ranges, the endpoint values and the individual point values of the various ranges, and the individual point values may be combined with one another to produce one or more new numerical ranges, which should be deemed to have been specifically disclosed herein.

The first aspect of the present invention provides a catalyst comprising an active matrix and CeO₂, wherein the active matrix comprises La-Ni-based oxide having a perovskite structure; upon X-ray diffraction measurement, the catalyst has diffraction peaks at 2θ of 32.7±0.3°, 31.3±0.3°, and 28.0±0.3⁰; upon H₂-TPR measurement, the catalyst has at least one reduction peak at 400°C or below;
Based on the total amount of the catalyst, the content of CeO₂ is 1-20 wt%.

In the invention, the term "perovskite structure" has a broad definition, and refers to the same or a similar crystal structure as the perovskite CaTiO₃. "La-Ni-based oxide having a perovskite structure" refers to a compound containing Li, Ni and O elements and having the same or a similar crystal structure as the perovskite CaTiO₃, it may comprise LaNiO₃ and/or La₂NiO₄.

In the prior art, the researches on perovskite catalysts are generally limited to elemental doping or loading, and the studies on the special structure of perovskite composite oxide materials are insufficient. The catalyst provided by the invention has a special composite perovskite structure, upon X-ray diffraction (XRD) measurement, the catalyst has diffraction peaks at 2θ of 32.7±0.3°, 31.3±0.3°, and 28.0±0.3°. Based on the JCPDS standard card fitting analysis, the diffraction peak at 2θ of 32.7±0.3° belongs to LaNiO₃ species with a perovskite structure, the diffraction peak at 2θ of 31.3±0.3° belongs to La₂NiO₄ species with a perovskite-like structure, the diffraction peak at 2θ of 28.0±0.3° belongs to the CeO₂ species.

In the invention, X-ray diffraction (XRD) measurement is performed on the X' Pert3 Powder type diffractometer using a Cu Kα target wire (incident wavelength 1.54056 Å) with a scan range of 0-90° and a scan speed of 10°/min.

In the invention, the technical feature "the catalyst has at least one reduction peak at 400°C or below" means that the reduction peak corresponding to the summit of the reduction peak in the H₂-TPR curve is 400°C or below; for the same reason, the description of the reduction temperature below all refers to the temperature corresponding to the summit of the reduction peak in the H₂-TPR curve.

In the prior art, the reduction temperature of Ni-based catalyst is high, and the reduction temperatures of Ni-based perovskite composite oxides that have been reported previously are generally above 400°C. In the present invention, upon H₂-TPR measurement, the catalyst has at least one reduction peak at 400°C or below; upon H₂-TPR measurement, the catalyst preferably has at least one reduction peak at 350-390°C, and further preferably, the catalyst has at least two reduction peaks at 350-390°C. For example, the catalyst preferably has a reduction peak at 350-370°C and a reduction peak at 380-390°C.

In the invention, the H₂-TPR measurement conditions comprise:
The reduction behavior of the catalyst is tested using a TP-5080 adsorption instrument. 30mg of a sample is initially loaded into a quartz tube, introduced with N₂ at a flow rate of 30mL/min, and heated to 150°C at a temperature rise rate of 10°C/min in N₂ atmosphere, the temperature is kept for 30min, then cooled to room temperature. The gas is switched to the atmosphere consisting of 5vol% of H₂ and 95vol% of N₂, and heated to 900°C at a temperature rise rate of 10°C/min to obtain the H₂-TPR curve. The tail gas is detected by using a Thermal Conductivity Detector (TCD).

In the present invention, the catalyst has a low reduction temperature, high activity and stability. The reason may be the interfacial effect formed by the CeO₂ dispersed on the surface of La-Ni-based oxide, due to the synergy of CeO₂, the LaNiO₃ structure having an infinite perovskite layer, the particular spatial structural property of the structure of La₂NiO₄ structure in which a rock salt layer and a perovskite layer coexist and alternate with each other is more favorable for Ni reduction, greatly decreases the reduction temperature of the catalyst, which is further conducive to reducing the average particle diameter of the reduced Ni particles; in addition, the existence of such an interfacial structure can significantly improve the electron transfer capacity and oxygen vacancy transport capacity inside the catalyst during the reaction process, and enhance the catalyst's ability to inhibit the carbon deposition process and the ability to convert the generated carbon deposition, thereby improving the activity and stability of the catalyst.

According to the invention, it is preferred that Ni element in the La-Ni-based oxide having a perovskite structure comprises divalent nickel and trivalent nickel. It is understandable that the divalent nickel may be the Ni species in the structure of La₂NiO₄ and the trivalent nickel may be the Ni species in the structure of LaNiO₃.

In a further preferred embodiment, the area of a characteristic peak of the catalyst at 2θ of 32.7±0.3° upon X-ray diffraction measurement is denoted as S1, the area of a diffraction peak of the catalyst at 2θ of 31.3±0.3° is denoted as S2, the ratio S2/S1 is (0.5-1.5) : 1, more preferably (1.1-1.4) : 1. In the preferred circumstance, the catalyst having appropriate proportions of LaNiO₃ and La₂NiO₄ species is advantageous to further improve the activity, stability and carbon deposition resistance of said catalyst.

In the invention, the peak area of diffraction peaks in the XRD spectrogram is measured by using the Gaussian fitting integral method.

In a further preferred embodiment, the molar ratio of Ni element to La element in the catalyst upon XPS characterization is (1.5-2.5) : 1, for example, it may be 1.5:1, 1.6:1, 1.7:1, 1.8:1, 1.9:1, 2:1, 2.1:1, 2.2:1, 2.3:1, 2.4:1, 2.5:1, or other typically but not restricted molar ratios or ranges therebetween, preferably, the molar ratio of Ni element to La element in the catalyst upon XPS characterization is (1.8-2.2) : 1.

In the invention, both the valence state of element and the content of surface element are measured by X-ray photoelectron spectroscopy (XPS), the XPS characterization is measured on the AXIS-ULTRALDD ray photoelectron spectroscopy, using a monochromatic Al-Kα target source, and vacuumizing under the condition of 1×10⁻⁸ Pa. To subtract the charge effect, the C1s (with a binding energy of 284.6 eV) peak of the contaminated carbon is used as a calibration standard.

According to some preferred embodiments of the invention, the catalyst has an average particle size of Ni particles measured by X-ray diffraction within the range of 13-22nm, after subjecting to a reduction at 450°C in a hydrogen gas atmosphere for 2 hours; for example, the average particle size may be 13nm, 15nm, 16nm, 17nm, 18nm, 20nm, 22nm, or other typically but not restricted particle sizes or ranges therebetween, preferably, the catalyst has an average particle size of Ni particles within the range of 15-18nm. In the prior art, the Ni-based perovskite catalyst after reduction generally has an average particle size of Ni particles within the range of 30-45nm. The catalyst provided by the invention after reduction has a smaller particle size.

In the invention, the measurement method of an average particle size of Ni particles specifically comprise: the diffraction angle of crystal planes and the half-peak width of the corresponding Ni⁰ phase at 2θ=44.5° are measured by XRD characterization, the particle size of activity center is then measured by using the Debye-Scherrer Equation.

In the prior art, the introduction of CeO₂ into the catalyst primarily takes advantage of the oxygen storage properties of CeO₂ in order to facilitate the elimination of carbon deposition from the catalyst surface during the reaction process, but a high content of CeO₂ is required in order to achieve the above-mentioned purpose, the content is typically above 10 wt%. In contrast, the introduction of CeO₂ in the invention serves to form the interfacial effect, a high content of CeO₂ is not required. According to the present invention, based on the total amount of the catalyst, the content of CeO₂ is within the range of 1-20wt%, such as 1wt%, 2wt%, 3wt%, 4wt%, 5wt%, 6wt%, 7wt%, 8wt%, 9wt%, 10wt%, 12wt%, 14wt%, 16wt%, 18wt% or 20wt%. Preferably, the content of CeO₂ is 1-6wt%, more preferably 2-4wt%, based on the total amount of the catalyst. Under the above-mentioned preferred circumstances, it is conducive to the formation of the maximum amount of interfacial surface between CeO₂ and the perovskite matrix, if the content of CeO₂ is too low, there is less interface between CeO₂ and the perovskite matrix; if the content of CeO₂ is too high, the excess CeO₂ will overlay most of the perovskite matrix surface, resulting in a decreased amount of interfacial exposure and the reduced activity of said catalyst.

The catalyst composition is analyzed through the X-ray fluorescence spectroscopy (XRF, EAGLE III, EDAX Inc.), wherein a full scan of the elements in the catalyst is performed for analyzing the element composition of the catalyst and the element content thereof.

In a further preferred embodiment, upon XPS characterization, the molar ratio of Ni element to the Ce element in the catalyst is (1-20) : 1, such as 1:1, 2:1, 3:1, 4:1, 5:1, 6:1, 7:1, 8:1, 9:1, 10:1, 11:1, 12:1, 13:1, 14:1, 15:1, 18:1, 20:1, preferably (2-15) :1.

According to a preferred embodiment of the invention, the active matrix further comprises an auxiliary element, which is at least one of alkaline earth metals, preferably at least one of Mg, Ca and Sr, more preferably Mg. In the above preferred circumstance, it is advantageous to further improve the carbon deposition resistance and stability of the catalyst.

According to the invention, it is preferable that the content of said auxiliary element calculated in terms of oxide is preferably 1-5wt%, such as 1wt%, 1.5wt%, 2wt%, 2.5wt%, 3wt%, 4wt%, 5wt%, more preferably 1.5-3wt%, based on the total mass of the active matrix.

According to a preferred embodiment of the invention, the active matrix further comprises a molecular sieve. The regular pore and channel structure of molecular sieves and the well-developed surface organic groups (e.g. hydroxyl) inside the pores and channel and their interaction with the perovskite can be utilized for further improving the carbon deposition resistance of the catalyst, and further restricts an average particle size of the Ni particles.

Preferably, based on the total mass of the active matrix, the content of said molecular sieve calculated in terms of silica is 5-15wt%, such as 5wt%, 8wt%, 9wt%, 9.5wt%, 10wt%, 10.5wt%, 11wt%, preferably 9-11wt%.

In the present invention, the presence of said molecular sieve can be demonstrated by crystal phase analysis, and its content can be determined by using the XRF characterization method.

The sample crystal phase analysis is performed on the Philips PW 1710 type X-ray diffraction instrument, with the Cu target, Kα radiation source, tube voltage of 40KV, tube current of 30mA, scan step of 0.02°, scan speed of 1.2°/min, and scan range 2θ=1-10°.

In a further preferred embodiment, the molecular sieve is an all-silica mesoporous molecular sieve having a regular pre and channel structure, preferably at least one of MCM-41 type molecular sieve, SBA-15 type molecular sieve, MCM-48 type molecular sieve and SBA-16 type molecular sieve, more preferably MCM-41 type molecular sieve.

In particularly preferred embodiments of the invention, the catalyst comprises an active matrix and CeO₂, wherein the active matrix comprises La-Ni-based oxide having a perovskite structure, an auxiliary element and a molecular sieve; upon X-ray diffraction measurement, the catalyst has diffraction peaks at 2θ of 32.7±0.3°, 31.3±0.3°, and 28.0±0.3°;
Upon H₂-TPR measurement, the catalyst has at least one reduction peak at 400°C or below;
The content of CeO₂ is 1-20 wt%, based on the total amount of the catalyst.

The selection ranges and contents of the auxiliary element and molecular sieve are same as those in the preceding text, it will not be repeatedly described herein.

The second aspect of the present invention provides a preparation method for the catalyst, the preparation method comprises the following steps:
(1) Mixing a La source, a Ni source and a solvent in the presence of a complexing agent to obtain a mixture;
(2) Reacting the mixture to form a gel, then subjecting the gel to a first roasting to obtain a semi-finished catalyst;
(3) Contacting a solution containing soluble compounds of Ce with the semi-finished catalyst in the presence of a surfactant, and then carrying out a second roasting;
Wherein the surfactant comprises a polyoxyethylene-based nonionic surfactant and a polyalcohol-based nonionic surfactant.

According to some preferred embodiments of the invention, the molar ratio of Ni source in step (1) to La source calculated in terms of metal element is preferably (0.5-2) : 1, more preferably (0.5-1.5) : 1, such as 0.5:1, 1:1, 1.5:1.

Preferably, the molar ratio of the total molar amount of said La source and said Ni source calculated in terms of metal element to the complexing agent is (0.5-3) : 1, more preferably (1-2) : 1.

In the present invention, the specific species of La source and Ni source can be selected from a wide range, either soluble organic or inorganic salts of metals can be used in the invention, for example, at least one from the group consisting of nitrates, acetates, and oxalates of metals.

The La source and the Ni source may further contain crystal water, it is well-known among those skilled in the art.

The invention has a wide selection range for the complexing agent, any complexing agent that is capable of complexing the La sources and Ni sources may be used in the present invention. Preferably, the complexing agents are selected from citric acid and/or ethylenediamine tetra-acetic acid.

According to some preferred embodiments of the invention, the mixing may be carried out by initially dissolving a complexing agent in a solvent and then mixing with a La source and a Ni source. The mixing in step (1) may be performed under the stirring conditions, and the specific stirring conditions are not particularly limited in the invention, provided that the components can be mixed thoroughly. Preferably, the temperature of the mixing process is within the range of 50-100°C.

The invention has a wide range of choices for the solvent in step (1), preferably the solvent is water. The present invention does not impose particular definitions with respect to the dosage of said solvent, provided that it ensures that the components are sufficiently dispersed and mixed.

According to a preferred embodiment of the invention, the mixture in step (1) further comprises a precursor of auxiliary element, the auxiliary element is at least one of alkaline earth metals, preferably at least one of Mg, Ca and Sr, more preferably Mg.

Preferably, the precursor of auxiliary element is used in such an amount that the content of the auxiliary element calculated in terms of oxide in the semi-finished catalyst is 1-5wt%, such as 1wt%, 1.5wt%, 2wt%, 2.5wt%, 3wt%, 4wt%, 5wt%, more preferably 1.5-3wt%.

According to some preferred embodiments of the invention, the precursor of auxiliary element may be an oxide of the auxiliary element, or any substance from which an oxide of the auxiliary element can be formed by roasting, such as at least one of a nitrate, acetate and oxalate containing an auxiliary element.

According to some preferred embodiments of the invention, the mixture in step (1) further includes a molecular sieve. The mixing mode may comprise: initially dissolving a complexing agent in a solvent and then mixing with a La source, a Ni source, an optional auxiliary element precursor, and an optional molecular sieve.

Preferably, the molecular sieve is used in an amount such that the content of said molecular sieve calculated in terms of silica in the prepared semi-finished catalyst is 5-15wt%, such as 5wt%, 8wt%, 9wt%, 9.5wt%, 10wt%, 10.5wt%, 11wt%, preferably 9-11wt%.

The molecular sieve has the same selection ranges as those in the first aspect of the invention, it will not be repeatedly described herein.

Preferably, the molecular sieve has an average pore size within the range of 1-15nm, more preferably within the range of 5-10nm. The use of a molecular sieve with the preferred pore and channel structure, it is advantageous to desirably control the particle size of the catalyst and prevent agglomeration.

According to some preferred embodiments of the invention, the reaction conditions in step (2) comprise: a temperature of 50-100°C, more preferably 60-90°C, and a time of 1-12h, more preferably 6-8h.

Preferably, the conditions of the first roasting comprise: a temperature of 300-1,200°C, more preferably 400-600°C, and a time of 2-20h, more preferably 4-8h. An optional drying process may also be included prior to the first roasting, and the drying condition is not particularly limited in the invention, so long as the solvent can be removed. Preferably, the drying temperature is within the range of 80-120°C.

In the invention, the synergistic action of the polyoxyethylene-based nonionic surfactant and the polyalcohol-based nonionic surfactant is conducive to forming an interfacial effect between the CeO₂/La-Ni-based oxides, thereby advantageously lowering the reduction temperature of the catalyst, and improving the activity and stability of said catalyst.

According to some preferred embodiments of the invention, the polyoxyethylene-based nonionic surface active agent is selected from polyethylene glycol and/or fatty alcohol polyoxyethylene ether, preferably at least one selected from the group consisting of PEG200, PEG400, PEG600, AEO-7, AEO-8 and AEO-9, more preferably at least one of PEG200, PEG400 and PEG600, and further preferably PEG400.

According to some preferred embodiments of the invention, the polyalcohol-based nonionic surfactant is sorbitan fatty acid ester, preferably at least one of sorbitan monopalmitate (Span 40), sorbitan monooleate (Span 80) and sorbitan monostearate (Span 60), more preferably sorbitan monooleate (Span 80).

In a further preferred embodiment, the mass ratio of the polyoxyethylene-based nonionic surfactant to the polyalcohol-based nonionic surfactant is 1: (0.1-1), such as 1:0.1, 1:0.2, 1:0.3, 1:0.4, 1:0.5, 1:0.6, 1:0.7, 1:0.8, 1:0.9, 1:1, and other mass ratio or a range therebetween; preferably, the mass ratio of the polyoxyethylene-based nonionic surfactant to the polyalcohol-based nonionic surfactant is 1: (0.1-0.5), more preferably 1: (0.1-0.2). In the aforementioned preferred circumstance, it is advantageous to achieve desirable dispersion of CeO₂ on the catalyst surface and optimize the interfacial effect.

The objects of the invention can be achieved as long as the contacting of step (3) is ensured to be implemented in the presence of the surfactant. According to some preferred embodiments of the invention, the mass ratio of the soluble compound of Ce calculate in terms of CeO₂ to the surfactant is 1: (1-10), such as 1:1, 1:2, 1:3, 1:4, 1:5, 1:6, 1:7, 1:8, 1:9, 1:10, preferably 1: (1-8). Under the aforementioned preferred circumstances, it is advantageous to further improve the activity and stability of said catalyst.

The present invention is not particularly limited with respect to the mode of introducing the surfactant, the surfactant and a soluble compound of Ce can be prepared into a solution and then contacted with the semi-finished catalyst; it is also possible to introduce the surfactant by contacting the solution containing a soluble compound of Ce with the semi-finished catalyst.

In the invention, the selection ranges of the soluble compound of Ce are wide, as long as the Ce element can be provided by the compound, preferably, the soluble compound of Ce is at least one selected from the group consisting of cerium nitrate, cerium acetate and cerium oxalate.

According to the invention, the solvent of the solution containing the soluble compound of Ce can be selected from the conventional organic solvents in the field, preferably at least one of alcohols, ketones or hydrocarbons, more preferably at least one of methanol, ethanol, acetone and petroleum ether, further preferably ethanol and/or methanol.

The dosage of said solvent is not particularly defined in the present invention, as long as the dissolution of the soluble compound of Ce can be achieved. Preferably, the mass ratio of the soluble compound of Ce calculated in terms of oxide to the solvent is 1: (1-50), more preferably 1: (10-30).

In the invention, the solution of the soluble compound containing Ce is used in an amount such that the prepared catalyst has a CeO₂ content within the range of 1-20wt%, such as 1wt%, 2wt%, 3wt%, 4wt%, 5wt%, 6wt%, 7wt%, 8wt%, 9wt%, 10wt%, 12wt%, 14wt%, 16wt%, 18wt% or 20wt%. Preferably, the solution of the soluble compound containing Ce is used in an amount such that the prepared catalyst has a CeO₂ content within the range of 1-6wt%, more preferably within the range of 2-4wt%.

In some preferred embodiments of the invention, the second roasting conditions comprise: a roasting temperature of 400-600°C, and a constant temperature time of 2-6h.

Preferably, the second roasting modes include: the temperature is initially increased to 100-150°C at a temperature rise rate of 3-6°C/min, for example, the temperature may be 100°C, 105°C, 110°C, 115°C, 120°C, 125°C, 130°C, 135°C, 140°C, 145°C, 150°C and so on; then heated to 200-250°C at a temperature rise rate of 0.2-0.6°C/min, for example, the temperature may be 200°C, 210°C, 220°C, 230°C, 240°C, 250°C and so on, further heated to the roasting temperature at a temperature rise rate of 3-6°C/min, the temperature is kept at the constant temperature.

In the invention, the preparation method further comprises a second drying prior to the second roasting, the second drying conditions comprise a temperature of 80-120°C and a time of 8-48h.

In the invention, preferably, the product of the contacting in step (3) is directly subjected to a second roasting (if the preparation method further comprises a second drying, a second drying and a second roasting are performed directly).

The third aspect of the present invention provides a use of the catalyst according to the first aspect or the catalyst produced with the preparation method according to the second aspect in the reforming reaction of methane and carbon dioxide.

The fourth aspect of the present invention provides a method for reforming reaction of methane and carbon dioxide, the method comprises: contacting methane and carbon dioxide with the catalyst under the reforming reaction conditions, wherein said catalyst is the catalyst according to the first aspect or the catalyst produced with the preparation method according to the second aspect.

According to some preferred embodiments of the invention, the reforming reaction conditions comprise: the molar ratio of methane to carbon dioxide is 1: (1-2), preferably 1: (1.2-1.5); the reaction temperature is 700-950°C, preferably 750-850°C, and more preferably 780-800°C; the pressure is 0.1-1MPa, preferably 0.1-0.5MPa, more preferably 0.2-0.4MPa; and the total gas hourly space velocity of the raw material gas is 10,000-30,000h⁻¹, preferably 15,000-25,000h⁻¹, more preferably 18,000-22,000 h⁻¹.

According to some preferred embodiments of the invention, the method further comprises reducing said catalyst prior to said contacting under a hydrogen gas atmosphere.

Preferably, the reduction conditions comprise: a temperature within the range of 400-600°C, preferably within the range of 400-550°C; a time within the range of 1-20h, preferably within the range of 2-6h; a pressure within the range of 0.1-0.5MPa, preferably within the range of 0.2-0.3MPa.

The invention will be described in detail below with reference to examples.

Unless otherwise specified in the following examples, all the materials in use were commercially available.

The MCM-41 molecular sieve used in the following examples was an all-silica molecular sieve having an average pore size of 6nm.

The X-ray diffraction (XRD) measurement was performed on the X' Pert3 Powder type diffractometer using a Cu Kα target wire (incident wavelength of 1.54056 Å) with a scan range of 0-90° and a scan speed of 10°/min.

The sample crystal phase analysis was performed on the Philips PW 1710 type X-ray diffraction instrument, with the Cu target, Kα radiation source, tube voltage of 40KV, tube current of 30mA, scan step of 0.02°, scan speed of 1.2°/min, and scan range 2θ=1-10°.

The H₂-TPR measurement was implemented by using a TP-5080 adsorption instrument. 30mg of a sample was initially loaded into a quartz tube, introduced with N₂ at a flow rate of 30mL/min, and heated to 150°C at a temperature rise rate of 10°C/min in N₂ atmosphere, the temperature was kept for 30min, then cooled to room temperature. The gas was switched to the atmosphere consisting of 5% of H₂ and 95% of N₂, and heated to 900°C at a temperature rise rate of 10°C/min. The tail gas was detected by using a Thermal Conductivity Detector (TCD). The reduction degree of the sample was calibrated by the amount of hydrogen consumption required for the in-situ reduction of CuO.

The catalyst composition was analyzed through the X-ray fluorescence spectroscopy (XRF, EAGLE III, EDAX Inc.), wherein a full scan of the elements in the catalyst was performed for analyzing the element composition of the catalyst and the element content thereof.

A method for measuring an average particle diameter of Ni particles comprised the following steps: a catalyst was subjected to reduction at 450°C in a hydrogen gas atmosphere for 2 hours; and then subjected to the X-ray diffraction (XRD) measurement performed on the X' Pert3 Powder type diffractometer using a Cu Kα target wire (incident wavelength of 1.54056 Å) with a scan range of 0-90° and a scan speed of 10°/min, the average particle diameter was calculated based on the Debye-Scherrer Equation.

The post-reaction catalyst carbon deposition content was characterized by the Thermogravimetric Analysis (TGA), the thermal analysis was performed on a Thermo-gravimetric (SETSYS Evolution, SETARAM) linked mass spectrometer (Hider, England) thermal analyzer manufactured by Perkin Elmer Incorporated in the United States of America (USA), the temperature rise rate was 10°C·min⁻¹, and tested under an air atmosphere, with a gas flow rate of 30 mL·min⁻¹ and the measurement temperatures ranges from room temperature to 900°C.

### Example 1

68.8g of citric acid was dissolved in 258mL of water, stirred at a temperature condition of 80°C for 30min to completely dissolve the citric acid; 155g of La(NO₃)₃·6H₂O and 104g of Ni(NO₃)₂·6H₂O were added into the aqueous solution of citric acid, further stirred at a temperature condition of 80°C for 1h; 2g of MgO and 10g of commercially available MCM-41 molecular sieve were added into the solution, stirred at 80°C for 8h to form a gel, which was dried at 110°C, and roasted at 650°C for 6h, the roasting temperature rise rate was 5°C/min. A semi-finished catalyst was obtained. The composition of the semi-finished catalyst was tested by XRF, the composition was shown in Table 1.

40g of ethanol, 4g of PEG400 and 0.4g of span 80 were respectively taken and blended to form a mixed solution, 8.4g of Ce(NO₃)₃·6H₂O was dissolved in the mixed solution, 80g of the semi-finished catalyst solid was then impregnated in the solution dissolved with the Ce(NO₃)₃·6H₂O for 8 hours, after completion of the impregnation, the impregnated semi-finished catalyst solid was directly put into an oven at the temperature of 100°C for drying, the dried semi-finished catalyst solid was placed in a muffle furnace for roasting, the heating mode of the muffle furnace was as follows: the temperature rise rate was 5°C/min within the temperature range of 50-120°C, the temperature rise rate was 0.5°C/min within the temperature range of 120-220°C, the temperature rise rate was 5°C/min within the temperature range of 220-450°C, the catalyst was subjected to roasting at 450°C for 4h, a catalyst CAT-1 was prepared.

The composition of the catalyst was shown in Table 1.

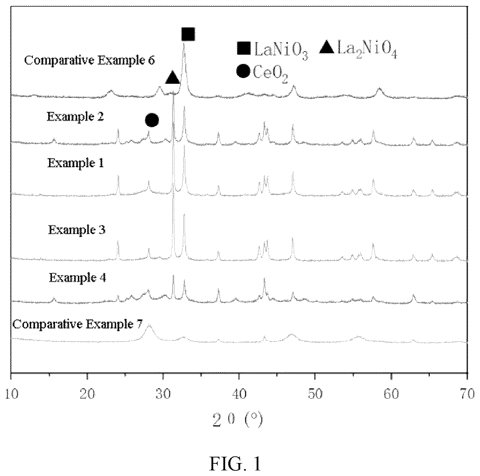

The catalyst was subjected to an X-ray diffraction (XRD) measurement, an XRD spectrogram was illustrated in FIG. 1, it indicated that the catalyst had diffraction peaks at 2θ of 28°, 31.2° and 32.7°, it demonstrated that the catalyst formed a perovskite LaNiO₃ structure and a perovskite-like La₂NiO₄ structure, and contained CeO₂.

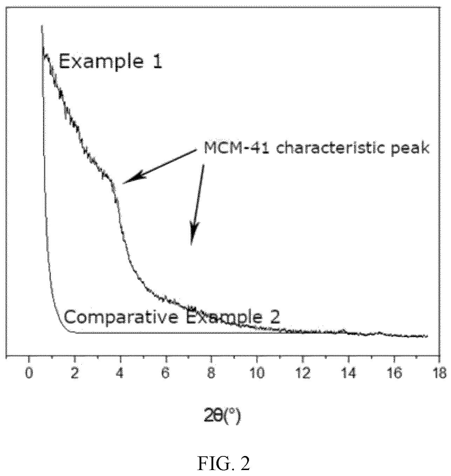

The sample crystalline phase analysis results were shown in FIG. 2, which clearly illustrated the characteristic peaks of MCM-41, it demonstrated that the MCM-41 molecular sieve existed in the catalyst.

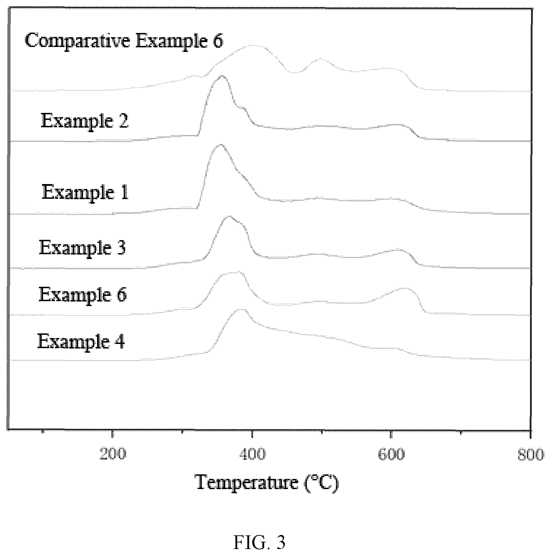

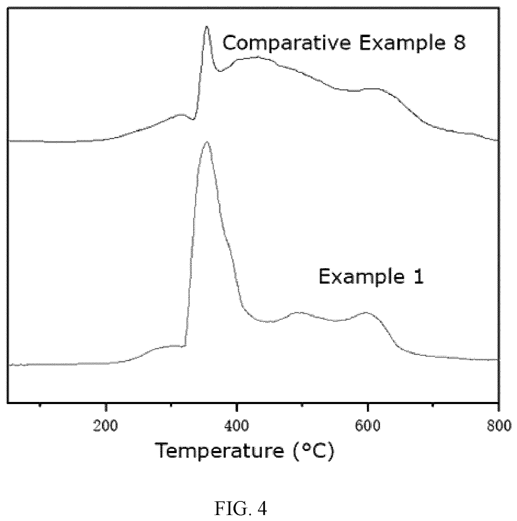

The catalyst was subjected to H₂-TPR measurement, the results were shown in FIG. 3 and FIG. 4, the catalyst had 2 reduction peaks at 354°C and 385°C.

### Example 2

68.8g of citric acid was dissolved in 258mL of water, stirred at a temperature condition of 80°C for 30min to completely dissolve the citric acid; 158g of La(NO₃)₃.6H₂O and 106g of Ni(NO₃)₂·6H₂O were added into the aqueous solution of citric acid, further stirred at a temperature condition of 80°C for 1h; 1g of MgO and 9g of commercially available MCM-41 molecular sieve were added into the solution, stirred at 80°C for 8h to form a gel, which was dried at 110°C, and roasted at 650°C for 6h, the roasting temperature rise rate was 5°C/min. A semi-finished catalyst solid was obtained.

10g of ethanol, 1.9g of PEG200 and 0.3g of span 60 were respectively taken and blended to form a mixed solution, 2g of Ce(NO₃)₃·6H₂O was dissolved in the mixed solution, 80g of the semi-finished catalyst solid was then impregnated in the solution dissolved with the Ce(NO₃)₃·6H₂O for 8 hours, after completion of the impregnation, the impregnated semi-finished catalyst solid was directly put into an oven at the temperature of 120°C for drying, the dried semi-finished catalyst solid was placed in a muffle furnace for roasting, the heating mode of the muffle furnace was as follows: the temperature rise rate was 5°C/min within the temperature range of 50-120°C, the temperature rise rate was 0.5°C/min within the temperature range of 120-220°C, the temperature rise rate was 5°C/min within the temperature range of 220-450°C, the catalyst was subjected to roasting at 450°C for 4h, a catalyst CAT-2 was prepared.

The composition of the catalyst was shown in Table 1.

The catalyst was subjected to an X-ray diffraction (XRD) measurement, an XRD spectrogram was illustrated in FIG. 1, it indicated that the catalyst had diffraction peaks at 2θ of 28.1°, 31.4° and 32.9°, it demonstrated that the catalyst formed a perovskite LaNiO₃ structure and a perovskite-like La₂NiO₄ structure, and contained CeO₂.

The catalyst was subjected to H₂-TPR measurement, the results were shown in FIG. 3, the catalyst had 2 reduction peaks at 354°C and 389°C.

### Example 3

68.8g of citric acid was dissolved in 258mL of water, stirred at a temperature condition of 80°C for 30min to completely dissolve the citric acid; 151.4g of La(NO₃)₃.6H₂O and 101.7g of Ni(NO₃)₂·6H₂O were added into the aqueous solution of citric acid, further stirred at a temperature condition of 80°C for 1h; 3g of MgO and 11g of commercially available MCM-41 molecular sieve were added into the solution, stirred at 80°C for 8h to form a gel, which was dried at 100°C, and roasted at 650°C for 6h, the roasting temperature rise rate was 5°C/min. A semi-finished catalyst solid was obtained.

129g of ethanol, 29.4g of AEO-8 and 5.8g of span 40 were respectively taken and blended to form a mixed solution, 12.9g of Ce(NO₃)₃·6H₂O was dissolved in the mixed solution, 80g of the semi-finished catalyst solid was then impregnated in the solution dissolved with the Ce(NO₃)₃·6H₂O for 8 hours, after completion of the impregnation, the impregnated semi-finished catalyst solid was directly put into an oven at the temperature of 100°C for drying, the dried semi-finished catalyst solid was placed in a muffle furnace for roasting, the heating mode of the muffle furnace was as follows: the temperature rise rate was 5°C/min within the temperature range of 50-120°C, the temperature rise rate was 0.5°C/min within the temperature range of 120-220°C, the temperature rise rate was 5°C/min within the temperature range of 220-450°C, the catalyst was subjected to roasting at 450°C for 4h, a catalyst CAT-3 was prepared.

The composition of the catalyst was shown in Table 1.

The catalyst was subjected to an X-ray diffraction (XRD) measurement, an XRD spectrogram was illustrated in FIG. 1, it indicated that the catalyst had diffraction peaks at 2θ of 28.0°, 31.3° and 32.7°, it demonstrated that the catalyst formed a perovskite LaNiO₃ structure and a perovskite-like La₂NiO₄ structure, and contained CeO₂.

The catalyst was subjected to H₂-TPR measurement, the results were shown in FIG. 3, the catalyst had 2 reduction peaks at 366°C and 386°C.

### Example 4

68.8g of citric acid was dissolved in 258mL of water, stirred at a temperature condition of 80°C for 30min to completely dissolve the citric acid; 155g of La(NO₃)₃.6H₂O and 104g of Ni(NO₃)₂·6H₂O were added into the aqueous solution of citric acid, further stirred at a temperature condition of 80°C for 1h; 2g of MgO and 10g of commercially available MCM-41 molecular sieve were added into the solution, stirred at 80°C for 8h to form a gel, which was dried at 110°C, and roasted at 650°C for 6h, the roasting temperature rise rate was 5°C/min. A semi-finished catalyst solid was obtained.

260g of ethanol, 65g of PEG400 and 6.5g of span 80 were respectively taken and blended to form a mixed solution, 50.5g of Ce(NO₃)₃·6H₂O was dissolved in the mixed solution, 80g of the semi-finished catalyst solid was then impregnated in the solution dissolved with the Ce(NO₃)₃·6H₂O for 8 hours, after completion of the impregnation, the impregnated semi-finished catalyst solid was directly put into an oven at the temperature of 100°C for drying, the dried semi-finished catalyst solid was placed in a muffle furnace for roasting, the heating mode of the muffle furnace was as follows: the temperature rise rate was 5°C/min within the temperature range of 50-120°C, the temperature rise rate was 0.5°C/min within the temperature range of 120-220°C, the temperature rise rate was 5°C/min within the temperature range of 220-450°C, the catalyst was subjected to roasting at 450°C for 4h, a catalyst CAT-4 was prepared.

The composition of the catalyst was shown in Table 1.

The catalyst was subjected to an X-ray diffraction (XRD) measurement, an XRD spectrogram was illustrated in FIG. 1, it indicated that the catalyst had diffraction peaks at 2θ of 28.0°, 31.2° and 32.7°, it demonstrated that the catalyst formed a perovskite LaNiO₃ structure and a perovskite-like La₂NiO₄ structure, and contained CeO₂.

The catalyst was subjected to H₂-TPR measurement, the results were shown in FIG. 3, the catalyst had a reduction peak at 390°C.

### Example 5

70.3g of citric acid was dissolved in 264mL of water, stirred at a temperature condition of 80°C for 30min to completely dissolve the citric acid; 158.5g of La(NO₃)₃·6H₂O and 106.5g of Ni(NO₃)₂·6H₂O were added into the aqueous solution of citric acid, further stirred at a temperature condition of 80°C for 1h; 10g of commercially available MCM-41 molecular sieve was added into the solution, stirred at 80°C for 8h to form a gel, which was dried at 110°C, and roasted at 650°C for 6h, the roasting temperature rise rate was 5°C/min. A semi-finished catalyst solid was obtained.

40g of ethanol, 4g of PEG400 and 0.4g of span 80 were respectively taken and blended to form a mixed solution, 8.4g of Ce(NO₃)₃·6H₂O was dissolved in the mixed solution, 80g of the semi-finished catalyst solid was then impregnated in the solution dissolved with the Ce(NO₃)₃·6H₂O for 8 hours, after completion of the impregnation, the impregnated semi-finished catalyst solid was directly put into an oven at the temperature of 100°C for drying, the dried semi-finished catalyst solid was placed in a muffle furnace for roasting, the heating mode of the muffle furnace was as follows: the temperature rise rate was 5°C/min within the temperature range of 50-120°C, the temperature rise rate was 0.5°C/min within the temperature range of 120-220°C, the temperature rise rate was 5°C/min within the temperature range of 220-450°C, the catalyst was subjected to roasting at 450°C for 4h, a catalyst CAT-5 was prepared.

The composition of the catalyst was shown in Table 1.

The catalyst was subjected to an X-ray diffraction (XRD) measurement, the XRD spectrogram was similar with that of Example 1 in FIG. 1. The catalyst was subjected to H₂-TPR measurement, the results were shown in FIG. 3, the catalyst had a reduction peak at 355°C and a reduction peak at 386°C.

### Example 6

76.5g of citric acid was dissolved in 286.6mL of water, stirred at a temperature condition of 80°C for 30min to completely dissolve the citric acid; 172.3g of La(NO₃)₃·6H₂O and 115.8g of Ni(NO₃)₂·6H₂O were added into the aqueous solution of citric acid, further stirred at a temperature condition of 80°C for 1h; 2g of commercially available MgO was added into the solution, stirred at 80°C for 8h to form a gel, which was dried at 110°C, and roasted at 650°C for 6h, the roasting temperature rise rate was 5°C/min. A semi-finished catalyst solid was obtained.

40g of ethanol, 4g of PEG400 and 0.4g of span 80 were respectively taken and blended to form a mixed solution, 8.4g of Ce(NO₃)₃·6H₂O was dissolved in the mixed solution, 80g of the semi-finished catalyst solid was then impregnated in the solution dissolved with the Ce(NO₃)₃·6H₂O for 8 hours, after completion of the impregnation, the impregnated semi-finished catalyst solid was directly put into an oven at the temperature of 100°C for drying, the dried semi-finished catalyst solid was placed in a muffle furnace for roasting, the heating mode of the muffle furnace was as follows: the temperature rise rate was 5°C/min within the temperature range of 50-120°C, the temperature rise rate was 0.5°C/min within the temperature range of 120-220°C, the temperature rise rate was 5°C/min within the temperature range of 220-450°C, the catalyst was subjected to roasting at 450°C for 4h, a catalyst CAT-6 was prepared.

The composition of the catalyst was shown in Table 1.

The catalyst was subjected to an X-ray diffraction (XRD) measurement, the XRD spectrogram was similar with that of Example 1 in FIG. 1. The catalyst was subjected to H₂-TPR measurement, the results were shown in FIG. 3, the catalyst had two reduction peaks at 352°C and 382°C.

### Example 7

78.1g of citric acid was dissolved in 293mL of water, stirred at a temperature condition of 80°C for 30min to completely dissolve the citric acid; 176g of La(NO₃)₃·6H₂O and 118.3g of Ni(NO₃)₂·6H₂O were added into the aqueous solution of citric acid, further stirred at a temperature condition of 80°C for 9h to form a gel, which was dried at 110°C, and roasted at 650°C for 6h, the roasting temperature rise rate was 5°C/min. A semi-finished catalyst solid was obtained.

40g of ethanol, 4g of PEG400 and 0.4g of span 80 were respectively taken and blended to form a mixed solution, 8.4g of Ce(NO₃)₃·6H₂O was dissolved in the mixed solution, 80g of the semi-finished catalyst solid was then impregnated in the solution dissolved with the Ce(NO₃)₃·6H₂O for 8 hours, after completion of the impregnation, the impregnated semi-finished catalyst solid was directly put into an oven at the temperature of 100°C for drying, the dried semi-finished catalyst solid was placed in a muffle furnace for roasting, the heating mode of the muffle furnace was as follows: the temperature rise rate was 5°C/min within the temperature range of 50-120°C, the temperature rise rate was 0.5°C/min within the temperature range of 120-220°C, the temperature rise rate was 5°C/min within the temperature range of 220-450°C, the catalyst was subjected to roasting at 450°C for 4h, a catalyst CAT-7 was prepared.

The composition of the catalyst was shown in Table 1.

The catalyst was subjected to an X-ray diffraction (XRD) measurement, the XRD spectrogram was similar with that of Example 1 in FIG. 1. The catalyst was subjected to H₂-TPR measurement, the catalyst had two reduction peaks at 356°C and 392°C.

### Example 8

68.8g of citric acid was dissolved in 258mL of water, stirred at a temperature condition of 80°C for 30min to completely dissolve the citric acid; 155g of La(NO₃)₃·6H₂O and 104g of Ni(NO₃)₂·6H₂O were added into the aqueous solution of citric acid, further stirred at a temperature condition of 80°C for 1h; 2g of MgO and 10g of commercially available MCM-41 molecular sieve were added into the solution, stirred at 80°C for 8h to form a gel, which was dried at 110°C, and roasted at 650°C for 6h, the roasting temperature rise rate was 5°C/min. A semi-finished catalyst solid was obtained.

40g of ethanol, 4g of PEG400 and 0.4g of span 80 were respectively taken and blended to form a mixed solution, 8.4g of Ce(NO₃)₃·6H₂O was dissolved in the mixed solution, 80g of the semi-finished catalyst solid was then impregnated in the solution dissolved with the Ce(NO₃)₃·6H₂O for 8 hours, after completion of the impregnation, the impregnated semi-finished catalyst solid was directly put into an oven at the temperature of 100°C for drying, the dried semi-finished catalyst solid was placed in a muffle furnace for roasting, the heating mode of the muffle furnace was as follows: the temperature rise rate was 5°C/min within the temperature range of 50-450°C, the catalyst was subjected to roasting at 450°C for 4h, a catalyst CAT-8 was prepared.

The composition of the catalyst was shown in Table 1.

The catalyst was subjected to an X-ray diffraction (XRD) measurement, an XRD spectrogram was illustrated in FIG. 1, it indicated that the catalyst had diffraction peaks at 2θ of 28.1°, 31.3° and 32.8°, it demonstrated that the catalyst formed a perovskite LaNiO₃ structure and a perovskite-like La₂NiO₄ structure, and contained CeO₂.

The catalyst was subjected to H₂-TPR measurement, the catalyst had a reduction peak at 390°C.

### Comparative Example 1

68.8g of citric acid was dissolved in 258mL of water, stirred at a temperature condition of 80°C for 30min to completely dissolve the citric acid; 155g of La(NO₃)₃·6H₂O and 104g of Ni(NO₃)₂·6H₂O were added into the aqueous solution of citric acid, further stirred at a temperature condition of 80°C for 1h; 2g of MgO and 10g of commercially available MCM-41 molecular sieve were added into the solution, stirred at 80°C for 8h to form a gel, which was dried at 110°C, and roasted at 650°C for 6h, the roasting temperature rise rate was 5°C/min. A catalyst DCAT-1 was prepared.

The composition of the catalyst was shown in Table 2. The catalyst was subjected to H₂-TPR measurement, the catalyst had two reduction peaks at 432°C and 571°C.

### Comparative Example 2

77.6g of Ni(NO₃)₂·6H₂O was dissolved in 192g of water to form a solution, 80g of a commercially available SiO₂ carrier was impregnated in the solution for 8 hours, the impregnated SiO₂ carrier was dried at 110°C, and roasted at 650°C for 6h, the roasting temperature rise rate was 5°C/min. A semi-finished catalyst solid was obtained.

40g of ethanol, 4g of PEG400 and 0.4g of span 80 were respectively taken and blended to form a mixed solution, 8.4g of Ce(NO₃)₃·6H₂O was dissolved in the mixed solution, 80g of the semi-finished catalyst solid was then impregnated in the solution dissolved with the Ce(NO₃)₃·6H₂O for 8 hours, after completion of the impregnation, the impregnated semi-finished catalyst solid was directly put into an oven at the temperature of 100°C for drying, the dried semi-finished catalyst solid was placed in a muffle furnace for roasting, the heating mode of the muffle furnace was as follows: the temperature rise rate was 5°C/min within the temperature range of 50-120°C, the temperature rise rate was 0.5°C/min within the temperature range of 120-220°C, the temperature rise rate was 5°C/min within the temperature range of 220-450°C, the catalyst was subjected to roasting at 450°C for 4h, a catalyst DCAT-2 was prepared.

The catalyst was subjected to H₂-TPR measurement, the results illustrated that the catalyst had a reduction peak at 421°C. The composition of the catalyst was shown in Table 2. FIG. 2 illustrated a sample crystalline phase analysis spectrogram of the catalyst prepared in Comparative Example 2.

### Comparative Example 3

77.6g of Ni(NO₃)₂·6H₂O was dissolved in 192g of water to form a solution, 80g of a commercially available Al₂O₃ carrier was impregnated in the solution for 8 hours, the impregnated SiO₂ carrier was dried at 110°C, and roasted at 650°C for 6h, the roasting temperature rise rate was 5°C/min. A semi-finished catalyst solid was obtained.

40g of ethanol, 4g of PEG400 and 0.4g of span 80 were respectively taken and blended to form a mixed solution, 8.4g of Ce(NO₃)₃·6H₂O was dissolved in the mixed solution, 80g of the semi-finished catalyst solid was then impregnated in the solution dissolved with the Ce(NO₃)₃·6H₂O for 8 hours, after completion of the impregnation, the impregnated semi-finished catalyst solid was directly put into an oven at the temperature of 100°C for drying, the dried semi-finished catalyst solid was placed in a muffle furnace for roasting, the heating mode of the muffle furnace was as follows: the temperature rise rate was 5°C/min within the temperature range of 50-120°C, the temperature rise rate was 0.5°C/min within the temperature range of 120-220°C, the temperature rise rate was 5°C/min within the temperature range of 220-450°C, the catalyst was subjected to roasting at 450°C for 4h, a catalyst DCAT-3 was prepared.

The catalyst was subjected to H₂-TPR measurement, the results illustrated that the catalyst had a reduction peak at 431°C. The composition of the catalyst was shown in Table 2.

### Comparative Example 4

68.8g of citric acid was dissolved in 258mL of water, stirred at a temperature condition of 80°C for 30min to completely dissolve the citric acid; 155g of La(NO₃)₃·6H₂O and 104g of Co(NO₃)₂·6H₂O were added into the aqueous solution of citric acid, further stirred at a temperature condition of 80°C for 1h; 2g of MgO and 10g of commercially available MCM-41 molecular sieve were added into the solution, stirred at 80°C for 8h to form a gel, which was dried at 110°C, and roasted at 650°C for 6h, the roasting temperature rise rate was 5°C/min. A semi-finished catalyst solid was obtained.

40g of ethanol, 4g of PEG400 and 0.4g of span 80 were respectively taken and blended to form a mixed solution, 8.4g of Ce(NO₃)₃·6H₂O was dissolved in the mixed solution, 80g of the semi-finished catalyst solid was then impregnated in the solution dissolved with the Ce(NO₃)₃·6H₂O for 8 hours, after completion of the impregnation, the impregnated semi-finished catalyst solid was directly put into an oven at the temperature of 100°C for drying, the dried semi-finished catalyst solid was placed in a muffle furnace for roasting, the heating mode of the muffle furnace was as follows: the temperature rise rate was 5°C/min within the temperature range of 50-120°C, the temperature rise rate was 0.5°C/min within the temperature range of 120-220°C, the temperature rise rate was 5°C/min within the temperature range of 220-450°C, the catalyst was subjected to roasting at 450°C for 4h, a catalyst DCAT-4 was prepared.

The catalyst was subjected to H₂-TPR measurement, the results illustrated that the catalyst had a reduction peak at the temperature range of 410-430°C. The composition of the catalyst was shown in Table 2.

### Comparative Example 5

77.6g of Ni(NO₃)₂·6H₂O was dissolved in 192g of water to form a solution, 80g of a commercially available MCM-41 carrier was impregnated in the solution for 8 hours, the impregnated MCM-41 carrier was dried at 110°C, and roasted at 650°C for 6h, the roasting temperature rise rate was 5°C/min. A semi-finished catalyst solid was obtained.

40g of ethanol, 4g of PEG400 and 0.4g of span 80 were respectively taken and blended to form a mixed solution, 8.4g of Ce(NO₃)₃·6H₂O was dissolved in the mixed solution, 80g of the semi-finished catalyst solid was then impregnated in the solution dissolved with the Ce(NO₃)₃·6H₂O for 8 hours, after completion of the impregnation, the impregnated semi-finished catalyst solid was directly put into an oven at the temperature of 100°C for drying, the dried semi-finished catalyst solid was placed in a muffle furnace for roasting, the heating mode of the muffle furnace was as follows: the temperature rise rate was 5°C/min within the temperature range of 50-120°C, the temperature rise rate was 0.5°C/min within the temperature range of 120-220°C, the temperature rise rate was 5°C/min within the temperature range of 220-450°C, the catalyst was subjected to roasting at 450°C for 4h, a catalyst DCAT-5 was prepared.

The catalyst was subjected to H₂-TPR measurement, the results illustrated that the catalyst had a reduction peak at 425°C. The composition of the catalyst was shown in Table 2.

### Comparative Example 6

78.1g of citric acid was dissolved in 293mL of water, stirred at a temperature condition of 80°C for 30min to completely dissolve the citric acid; 176g of La(NO₃)₃·6H₂O and 118.3g of Ni(NO₃)₂·6H₂O were added into the aqueous solution of citric acid, further stirred at a temperature condition of 80°C for 9h to form a gel, which was then dried at 110°C, and roasted at 650°C for 6h, the roasting temperature rise rate was 5°C/min. A catalyst DCAT-6 was prepared.

The composition of the catalyst was shown in Table 2.

The catalyst was subjected to an X-ray diffraction (XRD) measurement, an XRD spectrogram was illustrated in FIG. 1, it indicated that the phase of said catalyst was mainly perovskite LaNiO₃ phase.

The catalyst was subjected to H₂-TPR measurement, the results illustrated that the catalyst had three reduction peaks at the temperature range of 400-650°C.

### Comparative Example 7

77.6g of Ni(NO₃)₂·6H₂O was dissolved in 192g of water to form a solution, 80g of a commercially available CeO₂ carrier was impregnated in the solution for 8 hours, the impregnated CeO₂ carrier was dried at 110°C, and roasted at 650°C for 6h, the roasting temperature rise rate was 5°C/min. A catalyst DCAT-7 was prepared.

The composition of the catalyst was shown in Table 2.

The catalyst was subjected to an X-ray diffraction (XRD) measurement, an XRD spectrogram was illustrated in FIG. 1, it indicated that the phase of said catalyst was mainly CeO₂ phase.

The catalyst was subjected to H₂-TPR measurement, the results illustrated that the catalyst had two reduction peaks at the temperature range of 410-480°C.

### Comparative Example 8

68.8g of citric acid was dissolved in 258mL of water, stirred at a temperature condition of 80°C for 30min to completely dissolve the citric acid; 155g of La(NO₃)₃·6H₂O and 104g of Co(NO₃)₂·6H₂O were added into the aqueous solution of citric acid, further stirred at a temperature condition of 80°C for 1h; 2g of MgO and 10g of commercially available MCM-41 molecular sieve were added into the solution, stirred at 80°C for 8h to form a gel, which was dried at 110°C, and roasted at 650°C for 6h, the roasting temperature rise rate was 5°C/min. A semi-finished catalyst solid was obtained.

8.4g of Ce(NO₃)₃·6H₂O was dissolved in 40g of water to form a solution, 80g of the semi-finished catalyst solid was then impregnated in the solution dissolved with Ce(NO₃)₃·6H₂O for 8 hours, after completion of the impregnation process, the impregnated semi-finished catalyst solid was directly put into an oven at the temperature of 100°C for drying, the dried semi-finished catalyst solid was placed in a muffle furnace for roasting, the heating mode of the muffle furnace was as follows: the temperature rise rate was 5°C/min within the temperature range of 50-120°C, the temperature rise rate was 0.5°C/min within the temperature range of 120-220°C, the temperature rise rate was 5°C/min within the temperature range of 220-450°C, the catalyst was subjected to roasting at 450°C for 4h, a catalyst DCAT-8 was prepared.

The composition of the catalyst was shown in Table 2.

The catalyst was subjected to an X-ray diffraction (XRD) measurement, the results indicated that a characteristic peak of La₂NiO₄ did not exist.

The catalyst was subjected to H₂-TPR measurement, as shown in FIG. 4, the results showed the presence of a large number of high temperature reduced nickel species at the temperature above 400°C.

**Table 1**

| | Example 1 | Example 2 | Example 3 | Example 4 | Example 5 | Example 6 | Example 7 | Example 8 |
|---|---|---|---|---|---|---|---|---|
| Ni: La molar ratio (XPS) | 1.8 | 1.9 | 1.9 | 2 | 1.8 | 1.9 | 2 | 1.8 |
| CeO₂ content wt% | 4 | 1 | 6 | 20 | 4 | 4 | 4 | 4 |
| Ni: Ce molar ratio (XPS) | 3.1 | 12.8 | 2.6 | 1.2 | 3.4 | 3.8 | 4.3 | 3.9 |
| Auxiliary element | Mg | Mg | Mg | Mg | - | Mg | - | Mg |
| Content of auxiliary element calculated in terms of oxide wt% | 2 | 1 | 3 | 2 | - | 2 | - | 2 |
| **Molecular** sieve | MCM-41 | MCM-41 | MCM-41 | MCM-41 | MCM-41 | - | - | MCM-41 |
| Content of molecular sieve calculated in terms of SiO₂ wt% | 10 | 9 | 11 | 10 | 10 | - | - | 10 |
| Average particle diameter of Ni particles, nm | 18 | 20 | 16 | 19 | 19 | 30 | 32 | 19 |
| S2/S1 | 1.4 | 1.2 | 1.1 | 1 | 1.2 | 0.9 | 0.5 | 1.1 |

| | | | | | | | | |
|---|---|---|---|---|---|---|---|---|
| Note: in the above table, the content of CeO₂ is based on the total amount of the catalyst, and the contents of the auxiliary element and the molecular sieve are based on the mass of the semi-finished catalyst. | | | | | | | | |

**Table 2**

| | Compar ative Exampl e 1 | Compar ative Exampl e 2 | Compar ative Exampl e 3 | Compar ative Exampl e 4 | Compar ative Exampl e 5 | Compar ative Exampl e 6 | Compar ative Exampl e 7 | Compar ative Exampl e 8 |
|---|---|---|---|---|---|---|---|---|
| Ni: La molar ratio (XPS) | 1.8 | 1.9 | 1.9 | 2.1 (Co: La) | - | 1.9 | - | 1.8 |
| CeO₂ content wt% | - | 4 | 4 | 4 | 4 | - | - | 4 |
| Ni: Ce molar ratio (XPS) | - | 3.6 | 2.8 | 3.7 (Co: Ce) | 3.9 | - | 10.2 | 5.9 |
| Auxiliary element | Mg | - | - | Mg | - | - | - | Mg |
| Content of | 2 | - | - | 2 | - | - | - | 2 |
| auxiliary element calculated in terms of oxide wt% | | | | | | | | |
| **Molecular** sieve | MCM-4 1 | | | MCM-4 1 | MCM-4 1 | | | MCM-4 1 |
| Content of molecular sieve calculated in terms of SiO₂ wt% | 10 | - | - | 10 | 80 | - | - | 10 |
| Average particle diameter of Ni particles, nm | 20 | 28 | 28 | 18 (Co) | 20 | 40 | 23 | 18 |
| S2/S1 | - | - | - | - | - | - | - | - |

| | | | | | | | | |
|---|---|---|---|---|---|---|---|---|
| Note: in the above table, the content of CeO₂ is based on the total amount of the catalyst, and the contents of the auxiliary element and the molecular sieve are based on the mass of the semi-finished catalyst. | | | | | | | | |

### Test Example

The catalysts in the aforementioned examples and comparative examples were subjected to the evaluation for reforming reaction of methane and carbon dioxide.

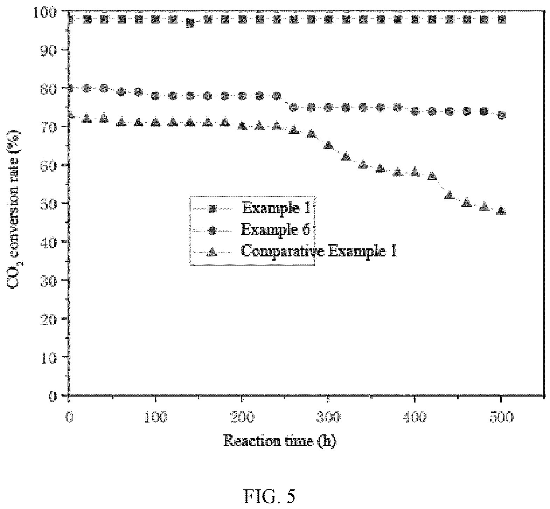

Firstly, the catalysts were subjected to reduction at a temperature of 450°C and under the hydrogen gas pressure of 0.3MPa for 4h, the reforming reaction of methane and carbon dioxide was then performed, the reaction conditions comprised: the molar ratio of methane to carbon dioxide was 1: 1.2, the reaction temperature was 800°C; the pressure was 0.3MPa, and the total gas hourly space velocity of the raw material gas was 20,000h⁻¹. After the reaction was performed for 96h, the product was collected, the composition of said products was analyzed through gas chromatography, the conversion rate of CO₂ and the conversion rate of CH₄ were calculated, the carbon deposition amount of the catalyst was tested by using thermogravimetric analysis method under an air atmosphere, and the results were shown in Table 3. 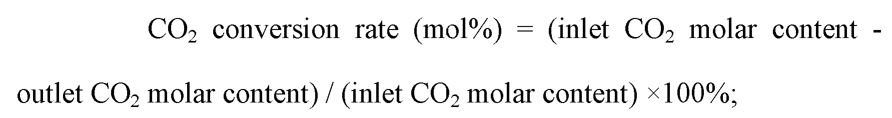
CO2 conversion rate (mol%) = (inlet CO2 molar content - outlet CO2 molar content) / (inlet CO2 molar content) ×100%; 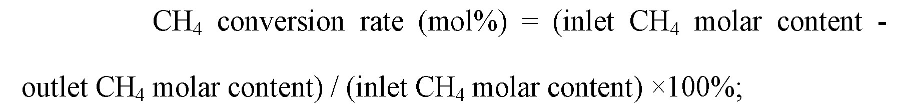
CH4 conversion rate (mol%) = (inlet CH4 molar content - outlet CH4 molar content) / (inlet CH4 molar content) ×100%;
The stability evaluation was performed on the catalysts prepared in Examples 1, 6 and Comparative Example 1 under the same conditions, and the change results of CO₂ conversion rate after 500 hours of continuous reaction were shown in FIG. 5.

**Table 3**

| Examples | CO₂ conversion rate (mol%) | CH₄ conversion rate (mol%) | Carbon deposition amount, mg/gcat |
|---|---|---|---|
| Example 1 | 98 | 97 | 1 |
| Example 2 | 95 | 94 | 1.5 |
| Example 3 | 97 | 95 | 1.3 |
| Example 4 | 93 | 92 | 2.3 |
| Example 5 | 92 | 92 | 3.6 |
| Example 6 | 89 | 88 | 4.5 |
| Example 7 | 85 | 85 | 4.8 |
| Example 8 | 89 | 89 | 10 |
| Comparative Example 1 | 80 | 83 | 97 |
| Comparative Example 2 | 79 | 76 | 65 |
| Comparative Example 3 | 76 | 75 | 63 |
| Comparative Example 4 | 18 | 17 | 53 |
| Comparative Example 5 | 50 | 51 | 165 |
| Comparative Example 6 | 73 | 72 | 198 |
| Comparative Example 7 | 23 | 24 | 94 |
| Comparative Example 8 | 79 | 78 | 26 |

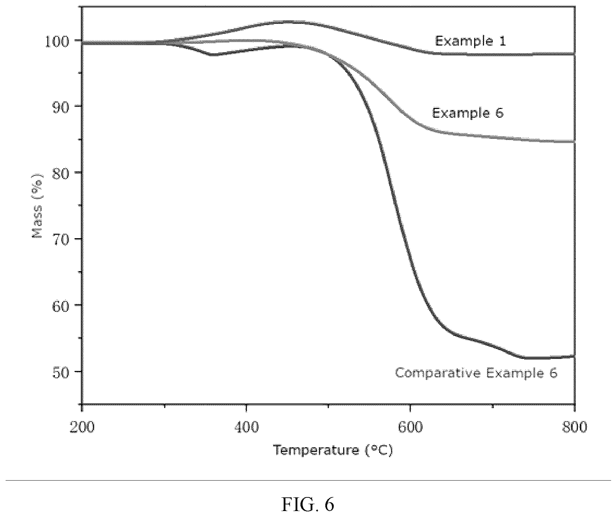

As can be seen from the results in Table 3, the catalysts prepared in the Examples provided by the invention have a high CO₂ conversion rate and CH₄ conversion rate after reaction for 96 hours, and have a low carbon deposition amount. The thermal weight loss diagram of the prepared in the Examples 1, 6 and Comparative Example 6 under an oxygen atmosphere after 100 hours of reaction was shown in FIG. 6, the catalysts provided by the invention have a strong carbon deposition resistance and desirable stability.

The above content describes in detail the preferred embodiments of the present invention, but the present invention is not limited thereto. A variety of simple modifications can be made in regard to the technical solutions of the present invention within the scope of the technical concept of the present invention, including a combination of individual technical features in any other suitable manner, such simple modifications and combinations thereof shall also be regarded as the content disclosed by the present invention, each of them falls into the protection scope of the present invention.

## Claims

1. A catalyst, is **characterized in that** the catalyst comprises an active matrix and CeO₂, wherein the active matrix comprises La-Ni-based oxide having a perovskite structure; upon X-ray diffraction measurement, the catalyst has diffraction peaks at 2θ of 32.7±0.3°, 31.3±0.3°, and 28.0±0.3°;
upon H₂-TPR measurement, the catalyst has at least one reduction peak at 400°C or below;
based on the total amount of the catalyst, the content of CeO₂ is 1-20 wt%.

2. The catalyst according to claim 1, wherein the catalyst has an average particle size of Ni particles measured by X-ray diffraction within the range of 13-22nm, preferably within the range of 15-18nm, after subjecting to a reduction at 450°C in a hydrogen gas atmosphere for 2 hours;
preferably, upon H₂-TPR measurement, the catalyst has at least one reduction peak at 350-390°C; more preferably at least two reduction peaks at 350-390°C.

3. The catalyst according to claim 1 or 2, wherein the content of CeO₂ is 1-6 wt%, preferably 2-4 wt%, based on the total amount of the catalyst;
preferably, upon XPS characterization, the molar ratio of Ni element to the Ce element in the catalyst is (1-20) : 1, more preferably (2-15) : 1.

4. The catalyst according to any one of claims 1-3, wherein Ni element in the La-Ni-based oxide having a perovskite structure comprises divalent nickel and trivalent nickel;
preferably, the area of a characteristic peak of the catalyst at 2θ of 32.7±0.3° upon X-ray diffraction measurement is denoted as S1, the area of a diffraction peak of the catalyst at 2θ of 31.3±0.3° is denoted as S2, the ratio S2/S1 is (0.5-1.5) : 1, more preferably (1.1-1.4) : 1.

5. The catalyst according to any one of claims 1-4, wherein the molar ratio of Ni element to La element in the catalyst upon XPS characterization is (1.5-2.5) : 1, preferably (1.8-2.2) : 1.

6. The catalyst according to claim 5, wherein the active matrix further comprises an auxiliary element, which is at least one of alkaline earth metals, preferably at least one of Mg, Ca and Sr, more preferably Mg; preferably, the content of said auxiliary element calculated in terms of oxide is 1-5wt%, more preferably 1.5-3wt%, based on the total mass of the active matrix.

7. The catalyst according to any one of claims 1-6, wherein the catalyst further comprises a molecular sieve.

8. The catalyst according to claim 7, wherein the content of said molecular sieve calculated in terms of silica is 5-15wt%, preferably 9-11wt%, based on the total mass of the active matrix.

9. The catalyst according to claim 7 or 8, wherein the molecular sieve is an all-silica mesoporous molecular sieve, preferably at least one of MCM-41 type molecular sieve, SBA-15 type molecular sieve, MCM-48 type molecular sieve and SBA-16 type molecular sieve, more preferably MCM-41 type molecular sieve.

10. A preparation method for the catalyst, is **characterized in that** the preparation method comprises the following steps:
(1) mixing a La source, a Ni source and a solvent in the presence of a complexing agent to obtain a mixture;
(2) reacting the mixture to form a gel, then subjecting the gel to a first roasting to obtain a semi-finished catalyst;
(3) contacting a solution containing soluble compounds of Ce with the semi-finished catalyst in the presence of a surfactant, and then carrying out a second roasting;
wherein the surfactant comprises a polyoxyethylene-based nonionic surfactant and a polyalcohol-based nonionic surfactant.

11. The preparation method according to claim 10, wherein the molar ratio of Ni source in step (1) to La source calculated in terms of metal element is preferably (0.5-2) : 1, preferably (0.5-1.5) : 1;
preferably, the molar ratio of the total molar amount of said La source and said Ni source calculated in terms of metal element to the complexing agent is (0.5-3) : 1.

12. The preparation method according to claim 11, wherein the mixture further comprises a precursor of auxiliary element, the auxiliary element is at least one of alkaline earth metals, preferably at least one of Mg, Ca and Sr, more preferably Mg;
preferably, the precursor of auxiliary element is used in such an amount that the content of the auxiliary element calculated in terms of oxide in the semi-finished catalyst is 1-5wt%, more preferably 1.5-3wt%.

13. The preparation method according to any one of claims 10-12, wherein the reaction conditions in step (2) comprise: a temperature of 50-100°C, preferably 60-90°C, and a time of 1-12h, preferably 6-8h;
preferably, the conditions of the first roasting comprise: a temperature of 300-1,200°C, and a time of 2-20h.

14. The preparation method according to any one of claims 10-13, wherein the polyoxyethylene-based nonionic surfactant is selected from polyethylene glycol and/or fatty alcohol polyoxyethylene ether, preferably at least one selected from the group consisting of PEG200, PEG400, PEG600, AEO-7, AEO-8 and AEO-9;
preferably, the polyalcohol-based nonionic surfactant is sorbitan fatty acid ester, preferably at least one of sorbitan monopalmitate, sorbitan monooleate and sorbitan monostearate;
preferably, the mass ratio of the polyoxyethylene-based nonionic surfactant to the polyalcohol-based nonionic surfactant is 1: (0.1-1), more preferably 1: (0.1-0.5).

15. The preparation method according to any one of claims 10-14, wherein the mass ratio of the soluble compound of Ce calculate in terms of CeO₂ to the surfactant is 1: (1-10), preferably 1: (1-8);
preferably, the solution of the soluble compound containing Ce is used in an amount such that the prepared catalyst has a CeO₂ content within the range of 1-20wt%, preferably 1-6wt%, more preferably 2-4wt%.

16. The preparation method according to any one of claims 10-15, wherein the second roasting conditions comprise: a roasting temperature of 400-600°C, and a constant temperature time of 2-6h;
preferably, the second roasting modes include: the temperature is initially increased to 100-150°C at a temperature rise rate of 3-6°C/min, then heated to 200-250°C at a temperature rise rate of 0.2-0.6°C/min, further heated to the roasting temperature at a temperature rise rate of 3-6°C/min, the temperature is kept at the constant temperature.

17. The preparation method according to any one of claims 10-16, wherein the mixture in step (1) further comprises a molecular sieve;
preferably, the molecular sieve is used in an amount such that the content of said molecular sieve calculated in terms of silica in the semi-finished catalyst is 5-15wt%, more preferably 9-11wt%.

18. The preparation method according to claim 17, wherein the molecular sieve is an all-silica mesoporous molecular sieve, preferably at least one selected from the group consisting of MCM-41 type molecular sieve, SBA-15 type molecular sieve, MCM-48 type molecular sieve and SBA-16 type molecular sieve, more preferably MCM-41 type molecular sieve.
preferably, the molecular sieve has an average pore size of 1-15nm.

19. Use of the catalyst according to any one of claims 1-9 or the catalyst produced with the preparation method according to any one of claims 10-18 in the reforming reaction of methane and carbon dioxide.

20. A method for reforming reaction of methane and carbon dioxide, is **characterized in that** the method comprises: contacting methane and carbon dioxide with the catalyst under the reforming reaction conditions, wherein said catalyst is the catalyst according to any one of claims 1-9 or the catalyst produced with the preparation method according to any one of claims 10-18.

21. The method according to claim 20, wherein the reforming reaction conditions comprise: the molar ratio of methane to carbon dioxide is 1: (1-2), preferably 1: (1.2-1.5); the reaction temperature is 700-950°C, preferably 750-850°C, and more preferably 780-800°C; the pressure is 0.1-1MPa, preferably 0.1-0.5MPa, more preferably 0.2-0.4MPa; and the total gas hourly space velocity of the raw material gas is 10,000-30,000h⁻¹, preferably 15,000-25,000h⁻¹, more preferably 18,000-22,000 h⁻¹.
